(19) **Europäisches Patentamt / European Patent Office / Office européen des brevets**

(11) **EP 4 221 327 A1**

(12) # EUROPEAN PATENT APPLICATION
published in accordance with Art. 153(4) EPC

(43) Date of publication:
02.08.2023 Bulletin 2023/31

(21) Application number: 21879097.0

(22) Date of filing: 17.08.2021

(51) International Patent Classification (IPC):
*H04W 36/00* (2009.01)

(86) International application number:
PCT/CN2021/112890

(87) International publication number:
WO 2022/078050 (21.04.2022 Gazette 2022/16)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 16.10.2020 CN 202011111593

(71) Applicant: GUANGDONG OPPO MOBILE
TELECOMMUNICATIONS
CORP., LTD.
Dongguan, Guangdong 523860 (CN)

(72) Inventor: LIU, Jun
Dongguan, Guangdong 523860 (CN)

(74) Representative: Mewburn Ellis LLP
Aurora Building
Counterslip
Bristol BS1 6BX (GB)

(54) **CELL SEARCH METHOD AND APPARATUS, CHIP, MOBILE TERMINAL, AND STORAGE MEDIUM**

(57) The present application relates to the technical field of mobile terminals. Disclosed are a cell search method and apparatus, a chip, a mobile terminal, and a storage medium. The cell search method comprises: according to a signal measurement value of a serving cell where a mobile terminal resides, determining a network service state of the mobile terminal; and when the network service state is a near-interrupted state, starting a cell search of the mobile terminal, the near-interrupted state being a state in between a normal service state and an interrupted service state. In the method, the cell search of a mobile terminal can be actively triggered when it is detected that the network service of the mobile terminal is in a near-interrupted state, such that before the network service of the mobile terminal enters an interrupted service state, the mobile terminal can leave, in advance, a cell having weak signal, thereby preventing the mobile terminal from having an abnormal service operation due to entering the interrupted service state.

determine a network service state of a mobile terminal according to a signal measurement value of a serving cell where the mobile terminal camps — S110

initiate a cell search for the mobile terminal when the network service state is a near-interrupted state, where the near-interrupted state is a state between the normal service state and the interrupted service state — S120

FIG. 3

**Description**

CROSS-REFERENCE TO RELATED APPLICATION(S)

This application claims priority to Chinese Patent Application No. 202011111593.0, filed October 16, 2020, the entire disclosure of which is hereby incorporated by reference.

TECHNICAL FIELD

This disclosure relates to the field of mobile terminal technology, in particular to a cell search method and device, a chip, a mobile terminal, and a storage medium.

BACKGROUND

With the development of economy and the progress of society, mobile communication networks have increasingly become an indispensable and important part of people's daily life. However, the coverage of the mobile network will inevitably have weak signal areas and blind areas at present and even for a long time in the future, such as elevators or basements in buildings, subways or tunnels in cities, remote mountainous areas, and the like. Especially in the initial stage of network construction, signal coverage may only exist in some hotspot areas. In these weak signal areas and blind areas, the terminal will enter an out-of-service (OOS) state for a long time or a short time. In this case, it is necessary to attempt to restore residence on the network through continuous cell searches.

However, the OOS state for a period of time makes users unable to perform any network-related service during this period of time, which has a great impact on user experience.

SUMMARY

In view of the above, the disclosure provides a cell search method and device, a chip, a mobile terminal, and a storage medium.

In a first aspect, implementations of the disclosure provide a cell search method. The method includes the following. A network service state of a mobile terminal is determined according to a signal measurement value of a serving cell where the mobile terminal camps. A cell search for the mobile terminal is initiated on condition that the network service state is a near-interrupted state, where the near-interrupted state is a state between a normal service state and an interrupted service state.

In a second aspect, implementations of the disclosure provide a cell search device. The cell search device includes a state determining module and a search initiating module. The state determining module is configured to determine a network service state of a mobile terminal according to a signal measurement value of a serving cell where the mobile terminal camps. The search initiating module is configured to initiate a cell search for the mobile terminal on condition that the network service state is a near-interrupted state, where the near-interrupted state is a state between a normal service state and an interrupted service state.

In a third aspect, implementations of the disclosure provide a chip. The chip includes a processor and an interface. The processor is configured to obtain program instructions via the interface and the processor is configured to run the program instructions to perform the method provided in the first aspect.

In a fourth aspect, implementations of the disclosure provide a mobile terminal. The mobile terminal includes one or more processors, a memory, and one or more program codes. The one or more program codes is stored in the memory and is configured to be executed by the one or more processors to perform the method provided in the first aspect.

In a fifth aspect, implementations of the disclosure provide a computer-readable storage medium. The computer-readable storage medium stores program codes which are invoked by a processor to perform the method provided in the first aspect.

BRIEF DESCRIPTION OF THE DRAWINGS

To describe technical solutions in implementations of the disclosure more clearly, the following briefly introduces accompanying drawings required for illustrating the implementations. Apparently, the accompanying drawings in the following description illustrate some implementations of the disclosure. Those of ordinary skill in the art may also obtain other drawings based on these accompanying drawings without creative efforts.

FIG. 1 illustrates a schematic diagram of a system architecture of a communication network system.
FIG. 2 illustrates a schematic flow chart of an existing cell search.

FIG. 3 illustrates a flow chart of a cell search method according to one implementation of the disclosure.

FIG. 4 illustrates a flow chart of a cell search method according to another implementation of the disclosure.

FIG. 5 illustrates a flow chart of S220 in the cell search method according to another implementation of the disclosure.

FIG. 6 illustrates another flow chart of S220 in the cell search method according to another implementation of the disclosure.

FIG. 7 illustrates a flow chart of S223b in the cell search method of FIG. 6 provided in the disclosure.

FIG. 8 illustrates a schematic diagram of a scene model of out-of-service (OOS) provided in the disclosure.

FIG. 9 illustrates a schematic diagram of another scene model of OOS provided in the disclosure.

FIG. 10 illustrates another flow chart of a cell search method according to another implementation of the disclosure.

FIG. 11 illustrates a flow chart of a cell search method according to yet another implementation of the disclosure.

FIG. 12 illustrates a main flow chart of a cell search method according to the disclosure.

FIG. 13 illustrates an overall flow chart of a cell search method according to the disclosure.

FIG. 14 illustrates a block diagram of a cell search device according to implementations of the disclosure.

FIG. 15 is a block diagram of a mobile terminal for executing the cell search method of implementations of the disclosure according to implementations of the disclosure.

FIG. 16 is a storage unit for storing or carrying program codes implementing the cell search method of implementations of the disclosure according to implementations of the disclosure.

## DETAILED DESCRIPTION

To enable those skilled in the art to better understand solutions of the disclosure, the technical solutions in implementations of the disclosure will be clearly and completely described below in conjunction with drawings in implementations of the disclosure.

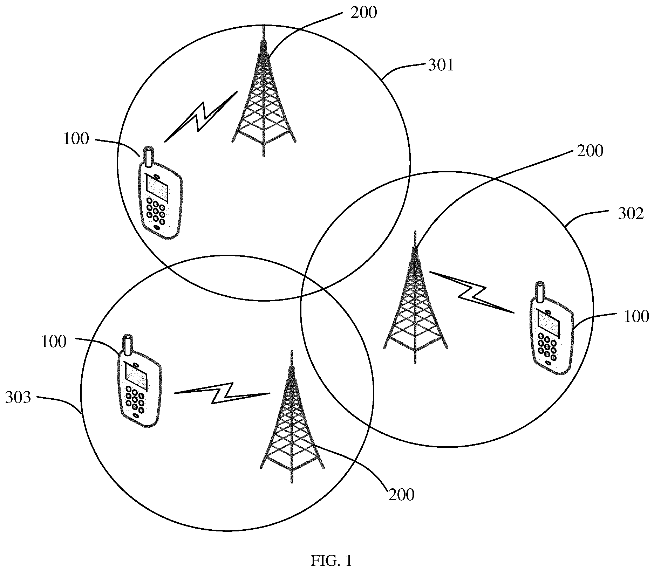

Referring to FIG. 1, FIG. 1 illustrates a communication system. The communication system includes a user equipment (UE) 100 and at least one network terminal 200.

The user equipment 100 may also be called a mobile terminal (MT), a mobile station (MS), etc., and is a device that provides voice or other service data connectivity to a user. As one implementation, the user equipment 100 may be a handheld device, a vehicle-mounted device, etc. with a wireless connection function. As another implementation, the user equipment 100 may also be a mobile phone, a tablet computer, a notebook computer, a handheld computer, a wearable device, a virtual reality (VR) device, an augmented reality (AR) device, a wireless terminal in industrial control, a wireless terminal in unmanned driving, a wireless terminal in a smart home, etc., which is not limited herein.

The network terminal 200 may be a device deployed in a radio access network and capable of performing wireless communication with the user equipment 100, and may include a base station (BS), which may also be called an eNB (evolved node B), a base station transceiver system (BTS), or an access point, etc. The base station may also have various forms, such as a macro base station, a micro base station, a relay station, and an access point.

When the network device 200 is a base station, each base station may be associated with specific geographical coverage areas (301, 302, 303) in which communication with various user equipment 100 is supported. In mobile communication, a geographical area covered by a wireless signal sent by the base station is called a cell, which generally refers to a geographical range covered by the signal of the base station. Generally, one base station is one cell (one base station can also be divided into several cells, and in this case the cell and the sector are equivalent), and the cell is further divided into sectors (generally, one cell has one sector/ two sectors/ three sectors/ even more sectors), and for each sector, the number of carrier frequencies is determined according to the traffic volume.

For convenience of description, in the following, a mobile terminal is used as an example of the user equipment to illustrate the cell camping process of the user equipment.

Before performing actual services, the mobile terminal needs to register in a certain cell to complete the network registration process, and the mobile terminal can receive services from the network only after successfully camping on the cell. Generally, to ensure fast network attachment, the mobile terminal may choose to camp on a suitable cell once it finds the cell. The suitable cell may refer to a cell where the mobile terminal can camp and obtain normal services, the cell has the ability and resources to serve the mobile terminal, and the cell should satisfy a cell selection criterion. That is, if the mobile terminal wants to successfully camp on a cell, the current cell should satisfy the cell selection criterion. The cell selection criterion may refer to a channel quality standard that a channel condition between the cell and the mobile terminal needs to satisfy, such as S-criterion, R-criterion, H-criterion, and the like.

In some implementations, when the cell selection criterion is the S-criterion, the mobile terminal can measure the cell to be camped on, to perform channel quality evaluation, to determine whether the channel condition between the cell and the mobile terminal satisfies the standard for camping: S-criterion. When the channel condition between a certain cell and the mobile terminal satisfies the S-criterion, this cell can be selected as the camping cell. The S-criterion may mean that the reference signal received power (RSRP) and the reference signal received quality (RSRQ) measured by the mobile terminal each are greater than a preset threshold.

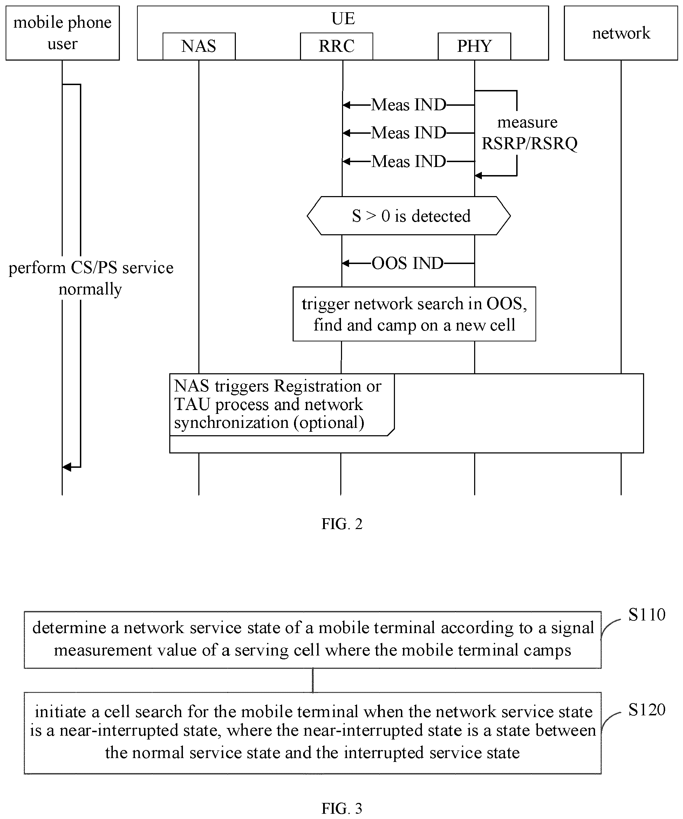

Generally, after the mobile terminal camps on a suitable cell, it will continue to perform cell measurement, to measure whether the channel condition between the cell and the mobile terminal still satisfies the S-criterion. If not satisfied, the mobile terminal is in an out of service (OOS) state, that is, a network service state of the mobile terminal is an interrupted service state. Then, the mobile terminal will trigger a new cell search, and after a new suitable cell is found, it will try to camp on and restore network services, as illustrated in FIG. 2.

However, since the S-criterion is not satisfied when the OOS state is detected, the mobile terminal cannot perform basic services such as phone calls or surfing the Internet at this time. Even if a new cell can be found quickly in the subsequent cell search process, the user can perceive the off-network for a period of time. In this period of time, the user is unable to do any network-related service, which has a great impact on user experience.

Based on this, the inventor has found through long-term research that no matter in which situation, the mobile terminal is in the normal camping state for a certain period of time before entering the OOS state. Therefore, this period of time can be fully used to determine whether the mobile terminal is in a near-OOS state. When the determination standard of the near-OOS state is satisfied, the mobile terminal can actively trigger the cell search, and select and camp on a new serving cell. As such, the mobile terminal is allowed to perform various services in a cell with better signal strength and signal quality, which ensures that the mobile terminal can leave the cell with weak signal in advance before entering the OOS state, improving user experience.

Therefore, after long-term research, the inventor proposed a cell search method and device, a chip, a mobile terminal, and a storage medium provided in implementations of the disclosure. By using the time period of signal change before the mobile terminal enters the OOS state, whether the network service of the mobile terminal is in the near-OOS state can be detected in advance. Then, the cell search is actively triggered when the network service of the mobile terminal is detected to be in the near-OOS state. As such, the mobile terminal can camp on the new cell with better network conditions as soon as possible and provide basic communication services on the new cell, to avoid the influence on the normal service as the mobile terminal enters the OOS state and improve the user experience. The cell search method is described in detail in the following implementations.

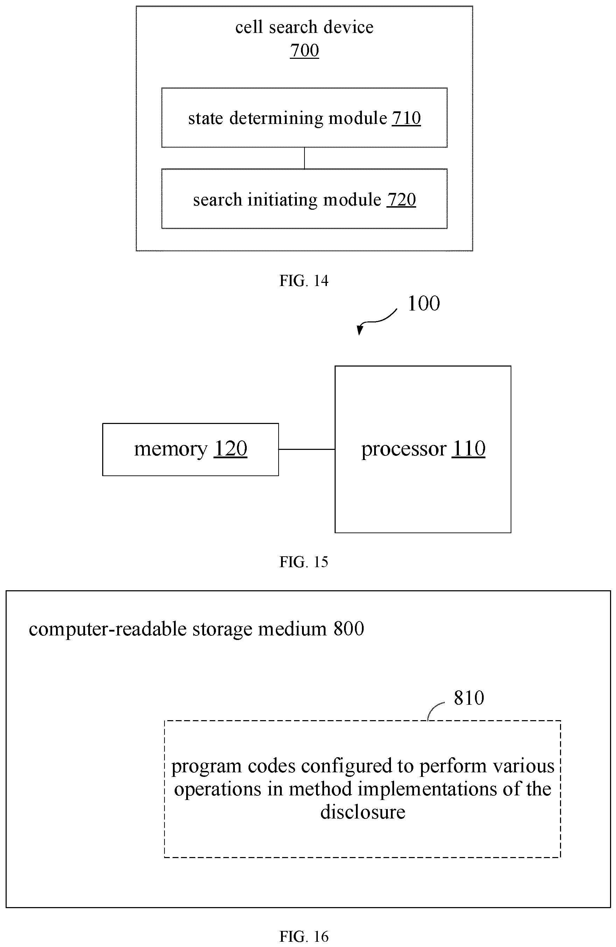

Referring to FIG. 3, FIG. 3 illustrates a schematic flow chart of a cell search method provided in an implementation of the disclosure. The cell search method can be performed by the above user equipment, which is not limited herein. The specific process of the implementation will be explained below with a mobile terminal as an example of the user equipment. In the implementation, the cell search method can be performed by a cell search device 700 as illustrated in FIG. 14 and a mobile terminal (as illustrated in FIG. 15) configured with the cell search device 700. The process illustrated in FIG. 3 will be described in detail below. The illustrated cell search method includes the following.

S 110, a network service state of a mobile terminal is determined according to a signal measurement value of a serving cell where the mobile terminal camps.

The serving cell where the mobile terminal camps may be a cell where a network terminal that establishes a connection with the mobile terminal is located. The mobile terminal may transmit and receive data information through the network terminal, to establish various data services with the network. The data service may be used to transmit text resources, audio resources, or image resources, for example, video downloads, voice calls, etc.

In the implementation of the disclosure, after the mobile terminal successfully camps on the serving cell, the mobile terminal can determine the network service state of the mobile terminal through the radio resource control (RRC) layer according to the signal measurement value of the serving cell where the mobile terminal camps. The network service state may be a normal service state, a near-interrupted state, an interrupted service state, etc. The signal measurement value of the cell may be a parameter for evaluating the signal quality, such as RSRP, RSRQ, pilot strength of the cell, which is not limited herein.

In some implementations, the normal service state can be understood as the state when the mobile terminal can camp on the current serving cell and can obtain a normal network service. In this case, the wireless signal of the serving cell covering the environment in which the mobile terminal is located is generally strong. The interrupted service state can be understood as the state when the mobile terminal cannot camp on the current serving cell and cannot obtain the network service. In this case, the wireless signal of the serving cell covering the environment in which the mobile terminal is located is generally weak or has no signal. The near-interrupted state can be the state between the normal service state and the interrupted service state, that is, the mobile terminal is still in the normal service state but is about to enter the interrupted service state. In this case, the wireless signal of the serving cell covering the environment in which the mobile terminal is located is generally weak and will soon become weaker or have no signal. As such, which of the above states the network service state of the mobile terminal is can be determined according to the signal measurement value obtained by measuring in real-time the serving cell.

In some implementations, according to a comparison result between the signal measurement value and a preset threshold, the current network service state of the mobile terminal may be determined or a future network service state of the mobile terminal may be predicted. For example, when the signal measurement values obtained by continuous multiple measurements each are far greater than the preset threshold, the wireless signal in the current environment is considered to be relatively strong, and the current network service state of the mobile terminal is determined to be the normal service state. The preset threshold may be a reference value for evaluating the network service state, which may be agreed by the protocol, configured by the network terminal, or determined by the mobile terminal, which is not limited herein. The preset threshold can be suitably set according to the actual scene. For example, the preset threshold can be configured by the network terminal in the serving cell through a system broadcast message.

As one implementation, when the signal measurement value includes an RSRP value and an RSRQ value, whether the current network service state of the mobile terminal is the interrupted service state may be determined by determining whether the RSRP value and the RSRQ value satisfy the S-criterion. Specifically, an S value can be first calculated according to the RSRP value and the RSRQ value, and then according to a comparison result between the S value and the preset threshold, whether the current network service state of the mobile terminal is the interrupted service state can be determined. The preset threshold needs to ensure that the current serving cell satisfies the minimum condition for the mobile terminal to camp on and cannot be too small. If the preset threshold is too small, the mobile terminal is still misjudged as not in the interrupted service state when the mobile terminal cannot camp on the current serving cell and can no longer obtain the network service. For example, because the minimum condition that the current serving cell needs to satisfy for the mobile terminal to camp on is S value > 0, the preset threshold may be set to be a value equal to or greater than 0.

The S value may include a Srxlev value (dB) and a Squal value (dB). The Srxlev value can be used to measure whether a received signal strength at the mobile terminal in the current serving cell reaches a standard for camping, which can be calculated according to the RSRP value. The Squal value can be used to measure whether a received signal quality at the mobile terminal in the current serving cell reaches the standard for camping, which can be calculated according to the RSRQ value.

Specifically, the Srxlev value can be calculated according to formula (1):

$$\text{Srxlev} = \text{Qrxlevmeas} - (\text{Qrxlevmin} + \text{Qrxlevminoffset}) - \text{Pcompensation} \qquad (1),$$

where Qrxlevmeas is the RSRP value obtained by measuring the serving cell; Qrxlevmin is the minimum signal received power required by the serving cell, which can be obtained from the system message broadcast by the serving cell; Qrxlevminoffset is the offset of Qrxlevmin, where the Qrxlevmin needs to offset to prevent ping-pong effect, only when the mobile terminal, which camps on the visited public land mobile network (VPLMN), searches for a public land mobile network (PLMN) with a high priority by evaluating cell quality with Srxlev. Pcompensation is Max (PEMAX-PUMAX, 0), i.e., the maximum of (PEMAX-PUMAX) and 0. PEMAX is the maximum uplink transmit power of the mobile terminal allowed in the serving cell, which can be obtained from the system message broadcast by the serving cell. PUMAX is the maximum uplink transmit power determined by the capability of the mobile terminal, which may be the maximum radio frequency transmit power of the mobile terminal determined according to the power level of the mobile terminal.

Specifically, the Squal value can be calculated according to formula (2):

$$\text{Squal} = \text{Qqualmeas} - (\text{Qqualmin} + \text{Qqualminoffset}) \qquad (2),$$

where Qqualmeas is the RSRQ value obtained by measuring the serving cell; Qqualmin is the minimum signal received quality required by the serving cell, which can be obtained from the system message broadcast by the serving cell; Qqualminoffset is the offset of Qqualmin, where it is necessary to offset Qqualmin only when the mobile terminal camping on the VPLMN searches for a PLMN with a high priority by evaluating cell quality with Squal.

It can be understood that, assume the preset threshold is set to 0. When the calculated S value is less than 0, it can be determined that the serving cell does not satisfy the S-criterion, and the mobile terminal can no longer camp on the serving cell and the mobile terminal is currently in the interrupted service state. When the calculated S value is greater than 0, it can be determined that the serving cell satisfies the S-criterion, and the mobile terminal can still camp on the serving cell, which can be considered that the mobile terminal is currently not in the interrupted service state.

Moreover, when the mobile terminal is in the normal service state or in the near-interrupted state, it can be considered that the mobile terminal is currently not in the interrupted service state, and the S value when the mobile terminal is in the normal service state is generally greater than the S value when the mobile terminal is in the near-interrupted state. Therefore, according to the degree that the obtained S value is greater than the preset threshold, it is possible to determine whether the mobile terminal is in the normal service state or the near-interrupted state. For example, assume the preset threshold is set to 0. When the calculated S value is far greater than the threshold 0, for example, the S value is 10, it can be determined that the mobile terminal is in the normal service state. When the S value is greater than the threshold 0 but approaches the threshold 0, for example, the S value is 2, it can be determined that the mobile terminal is in the near-interrupted state.

In some implementations, different network service states may be set with different preset thresholds, so that the corresponding network service state may be determined according to the preset threshold satisfied by the signal measurement value. For example, the normal service state corresponds to a first threshold, the near-interrupted state corresponds to a second threshold, and the interrupted service state corresponds to a third threshold, etc. When the signal measurement value currently satisfies the first threshold, the current network service state of the mobile terminal is determined to be the normal service state. For another example, in an implementation, when the signal measurement value includes the RSRP value and the RSRQ value, the corresponding different network service states can also be determined according to different thresholds that the calculated S values satisfy. For example, the first threshold is (6, $+\infty$), the second threshold is (0, 6), and the third threshold is ($-\infty$, 0). When the calculated S value > 6, which satisfies the first threshold, it can be determined that the mobile terminal is currently in the normal service state. When 0 < the calculated S value< 6, which satisfies the second threshold, it can be determined that the mobile terminal is currently in the near-interrupted state. When the calculated S value < 0, which satisfies the third threshold, it can be determined that the mobile terminal is currently in the interrupted service state.

In other implementations, according to a change trend of the signal measurement values, the current network service state of the mobile terminal may be determined or the future network service state of the mobile terminal may be predicted. For example, if the signal measurement values obtained by multiple measurements present a trend of attenuation (decrease) and the latest signal measurement value is sufficiently low, it may be considered that the mobile terminal is moving to the weak signal coverage area in the serving cell, or moving to the signal coverage blind area of the serving cell. In this case, it can be determined that the mobile terminal is in the near-interrupted state and is about to enter the interrupted service state. On the contrary, if the signal measurement values obtained by multiple measurements present a trend of increase and the latest signal measurement is sufficiently high, the mobile terminal can be considered to be moving to the strong signal coverage area in the serving cell. In this case, it can be determined that the mobile terminal is in the normal service state.

In some implementations, the network service state of the mobile terminal may be determined according to a change trend of signal measurement values over a period of time or may be determined according to a change trend of a certain number of signal measurement values, which is not limited herein. For example, the current network service state of the mobile terminal can be determined according to a change trend of signal measurement values obtained from recent 10 measurements.

It can be understood that, with the constant movement of the mobile terminal, the signal measurement value between the serving cell and the mobile terminal will change at all times. If the mobile terminal moves from the strong signal coverage area in the serving cell to the weak signal coverage area in the serving cell or to the signal coverage blind area of the serving cell, it can be seen that the signal measurement value between the serving cell and the mobile terminal will decrease during the movement and the signal measurement value may be lower and lower in the future. However, if the mobile terminal only moves in the strong signal coverage area in the serving cell, the signal measurement value between the serving cell and the mobile terminal may fluctuate continuously during the movement but will not decrease in a large range. Therefore, the change trend of the signal measurement values is related to the current network service state of the mobile terminal. As such, the current network service state of the mobile terminal can be determined according to different change trends of signal measurement values. The change trend of the signal measurement values may be the change trend of the RSRP values and the RSRQ values, or the change trend of the calculated S values, which is not limited herein.

It is to be understood that, the above method of determining the network service state of the mobile terminal according to the signal measurement values is merely for illustration, which is not limited in implementations of the disclosure. For example, the network service state of the mobile terminal can be determined by combining the comparison result between the signal measurement value and the preset threshold and the change trend of the signal measurement values, to improve the accuracy of predicting the network service state.

S 120, a cell search for the mobile terminal is initiated when the network service state is a near-interrupted state, where the near-interrupted state is a state between the normal service state and the interrupted service state.

In the implementation of the disclosure, after the network service state of the mobile terminal is determined, whether the network service state is the near-interrupted state can be determined, to determine whether it is necessary to enter the processing of avoiding interruption in advance. Specifically, when the network service state is near-interrupted state, it can be considered that the mobile terminal is about to enter the interrupted service state. In this case, it is necessary for the mobile terminal to enter the processing of avoiding interruption. That is, the cell search for the mobile terminal can be initiated immediately, so that the mobile terminal can select and camp on a new cell as soon as possible, and then the mobile terminal can perform various services on a cell with better signal strength and signal quality. As such, the mobile terminal can leave the weak signal area in the serving cell or no signal area of the serving cell in advance before entering the interrupted service state, to avoid affecting the normal service of the mobile terminal due to entering the interrupted service state and improve the user experience. The cell search initiated by the mobile terminal may be a cell search for a full frequency band or a cell search based on a stored frequency band that has been searched before, which is not limited herein.

In some implementations, when the network service state determined is the normal service state, which is not the near-interrupted state, it may be considered that the mobile terminal will not enter the interrupted service state for a short time. In this case, there is no need for the mobile terminal to enter the processing of avoiding interruption, that is, there is no need to start the cell search for the mobile terminal, and there is no need to select and camp on a new cell.

It can be understood that, since the network service state is generally changed in the order of the normal service state-> the near-interrupted state-> the interrupted service state, the network service state of the mobile terminal has already been determined to be the near-interrupted state before the network service state is determined to be the interrupted service state. In the implementation of the disclosure, when the network service state of the mobile terminal is determined to be the near-interrupted state, the mobile terminal will immediately initiate the cell search. That is, when the network service state of the mobile terminal is currently determined to be the interrupted service state, the cell search for the mobile terminal has actually lasted for a period of time. Compared with the existing solution in which the cell search is initiated after the network service state of the mobile terminal is determined to be the interrupted service state, the trigger time of the cell search of the implementation is advanced.

That is, the mobile terminal will actively initiate the cell search in advance in the near-interrupted state before entering the interrupted service state, to search for a better cell around in advance to camp on. As such, the mobile terminal can leave the serving cell which is not suitable for camping in advance before entering the interrupted service state, to avoid the mobile terminal entering the interrupted service state. It can be understood that, if the current network service state of the mobile terminal is determined to be the interrupted service state, the cell search from the near-interrupted state to the current time period has not found a better new cell for the mobile terminal to camp on, and at this time the cell search still needs to continue to find a new cell for the mobile terminal to camp on as soon as possible. This is because if the cell search initiated in the near-interrupted state has found a better new cell for the mobile terminal to camp on, the mobile terminal is not currently in the interrupted service state after it camps on the new cell.

In the cell search method provided in implementations of the disclosure, the signal measurement value(s) of the serving cell where the mobile terminal camps is obtained, the network service state of the mobile terminal is determined according to the signal measurement value, and when the determined network service state is the near-interrupted state, the cell search for the mobile terminal is initiated to camp on the new serving cell, where the near-interrupted state is the state between the normal service state and the interrupted service state. As such, whether the network service of the mobile terminal is about to enter the interrupted service state can be detected in advance, and when the network service of the mobile terminal is about to enter the interrupted service state, the cell search can be triggered, such that the mobile terminal can camp on the new cell with better network condition as soon as possible. Thus, each basic service of the user will not be affected by the service interruption, and the user experience can be improved.

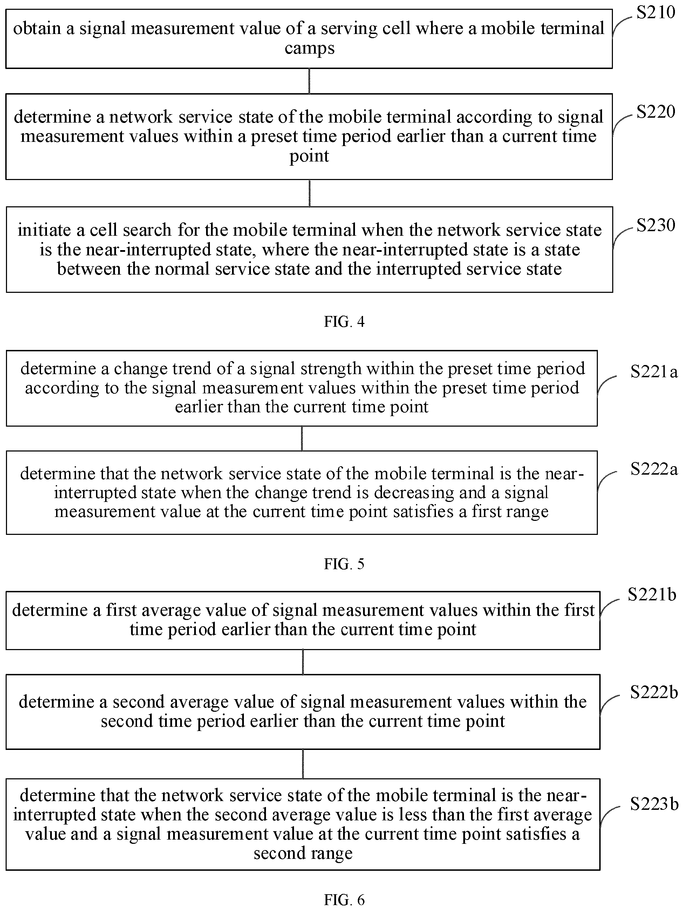

Referring to FIG. 4, FIG. 4 illustrates a flow chart of a cell search method provided in another implementation of the disclosure. The process illustrated in FIG. 4 will be described in detail below. The cell search method illustrated may include the following.

S210, a signal measurement value of a serving cell where a mobile terminal camps is obtained.

In the implementation of the disclosure, when the network service state of the mobile terminal needs to be detected, the signal measurement value of the serving cell where the mobile terminal camps can be obtained first. In some implementations, the mobile terminal may periodically or irregularly measure the signal quality of the serving cell. When the mobile terminal measures the signal quality of the serving cell periodically, the signal quality of the serving cell may be measured every 128ms. The mobile terminal can continuously obtain the signal measurement value, to determine the current network service state of the mobile terminal in real time.

In other implementations, every other specified time period, the mobile terminal may acquire multiple signal measurement values measured within the specified time period, to according to the multiple signal measurement values within the specified time period, detect the network service state within the specified time period and predict the future network service state. The number of data acquisitions can be reduced. The specified time period can be suitably set according to the actual scene and is not limited herein. For example, the specified time period can be 2S, 3S, 5S, and the like.

After the mobile terminal camps on an appropriate cell, it will continuously perform the signal measurement of the serving cell, to measure whether the channel quality between the camping cell and the mobile terminal still satisfies the standard for camping. Therefore, in some implementations, the signal parameter(s) obtained when the mobile terminal performs the signal measurement of the serving cell can be obtained as the signal measurement value of the serving cell where the mobile terminal camps. Specifically, after the mobile terminal camps on the appropriate cell, it continuously measures the channel quality of the cell: RSRP value and RSRQ value through the physical (PHY) layer and determines whether the RSRP value and RSRQ value satisfy the S-criterion through the RRC layer. If the S-criterion is not satisfied, the mobile terminal is considered to be in an OOS state, and then the mobile terminal attempts to camp on a new cell to restore network service. The RSRP value and the RSRQ value obtained when the channel quality of the serving cell is measured can be obtained as the signal measurement value of the serving cell where the mobile terminal camps.

S220, a network service state of the mobile terminal is determined according to signal measurement values within a preset time period earlier than a current time point.

In some implementations, due to the fluctuation and instability of the wireless signal quality and strength, the signal measurement value measured by the mobile terminal may also be unstable, such as a sudden peak at a certain time point or a sudden valley at a certain time point. If the current network service state is estimated only according to the current signal measurement value, it is easy to misjudge and thus the accuracy is not high. Therefore, the current network service state can be estimated by considering the signal measurement values for a period of time. The interference of individual unstable values can be avoided.

In some implementations, the mobile terminal may store measurement result data obtained from each measurement. The measurement result data may include the signal measurement value and the corresponding measurement time point. The measurement result data may be stored in an array, linked list, or file, etc., which is not limited herein. As such, when the mobile terminal estimates the network service state, the signal measurement values corresponding to the measurement time points within the preset time period earlier than the current time point can be obtained from the storage space, that is, the signal measurement values measured within the preset time period earlier than the current time point, and then the network service state can be estimated according to this batch of signal measurement values. The preset time period is the signal measurement time interval that needs to be referenced each time the network service state is determined, which may be a time period available for analysis, that is, there are enough signal measurement values within the preset time period, to be effectively estimated.

As one implementation, the preset time period may be a time period of a fixed time length. That is, the time period corresponding to the fixed time length earlier than the current time point is the preset time period, so that the mobile terminal can obtain the signal measurement values measured within the fixed time length. The fixed time length can be suitably set according to the actual needs and is not limited herein. For example, if the fixed time length is set to 3S, the preset time period is the time window of 3S that is immediately before the current time point. If the mobile terminal measures the signal quality of the serving cell 25 times in the 3S, the mobile terminal can obtain the signal measurement value obtained each time in the 25 times.

Alternatively, the preset time period can also be a time period in which the fixed number of measurements are completed, that is, the time period in which the fixed number of measurements are completed and which is earlier than the current time point is the preset time period. As such, the mobile terminal can directly obtain the signal measurement value obtained from each measurement in the fixed number of measurements. The fixed number of measurements can be suitably set according to the actual needs, and is not limited herein. For example, when the fixed number of measurements is set to 20, the preset time period is the time window corresponding to 20 measurements earlier than the current time point. The terminal equipment can obtain the signal measurement value obtained from each of the 20 measurements.

It is understood that, the time period in which the fixed number of measurements are completed may be fixed when the measurements are performed periodically. For example, if the mobile terminal measures the serving cell every 128ms, the signal measurement values of the first 20 times are obtained, that is, the signal measurement values within the first 2.5S are obtained.

In some implementations, the measurement result data may also be stored in an array or linked list of a fixed length and stored in a first-in first-out (FIFO) manner. The first item of the array or linked list represents the earliest data and the last item represents the latest data. As such, after the number of elements in the array or linked list reaches the fixed length, the mobile terminal can obtain the signal measurement values of the fixed number of measurements according to the signal measurement values stored in the array or linked list of the fixed length.

Exemplarily, the mobile terminal may define an array or linked list with a maximum length Maximum, to store measurement result data (e.g., RSRP value and RSRQ value and measurement time point: Time value) measured by the PHY. The Maximum can be either odd or even, which is not limited herein. If the amount of data stored in the array or linked list has not reached Maximum, the mobile terminal can continuously collect and store the data in the FIFO manner. If the amount of data stored has reached Maximum, when new measurement result data is received, the mobile terminal can remove the earliest stored measurement result data and move other measurement result data forward in turn, and then store the new measurement result data to the last position in the array or linked list. Therefore, the number of elements in the array or linked list can always be kept as Maximum, that is, the signal measurement values with the fixed number of measurements can be obtained.

In some implementations, after obtaining the signal measurement values within the preset time period earlier than the current time point, the mobile terminal may determine the network service state of the mobile terminal according to the change of the signal measurement values.

As another implementation, the network service state of the mobile terminal may be determined according to the change trend of successive signal measurement values. Specifically, referring to FIG. 5, S220 may include the following.

S221a, a change trend of a signal strength within the preset time period is determined according to the signal measurement values within the preset time period earlier than the current time point.

In some implementations, the mobile terminal may determine the change trend of the signal strength within the preset time period according to the signal measurement value obtained from each measurement within the preset time period. When the signal measurement value includes multiple types of values, the change trend of signal measurement values of each type can also be determined separately. Exemplarily, if the signal measurement includes an RSRP value and an RSRQ value, a change trend of the RSRP values and a change trend of the RSRQ values within the preset time period may be determined, respectively.

As one implementation, a change curve of the signal measurement values can be generated according to the signal measurement value obtained from each measurement and the measurement time point of each measurement, so that the change trend of the signal strength within the preset time period can be determined according to the trend of the curve. Specifically, the terminal device can arrange each measurement time point in time sequence on the horizontal axis (representing time), mark a corresponding signal measurement value above each measurement time point according to the numerical standard of the vertical axis (representing measurement value), and connect each signal measurement value with a line, to generate the change curve of the signal measurement values. The types of lines may be various and are not limited herein. For example, it can be broken line, smooth curve, dotted line, solid line, etc.

As another implementation, the signal measurement value obtained from each measurement within the preset time period can be sorted, to determine the change trend of the signal strength within the preset time period according to the sorting result.

S222a, determine that the network service state of the mobile terminal is the near-interrupted state when the change trend is decreasing and a signal measurement value at the current time point satisfies a first range.

In some implementations, when the magnitudes of the signal measurement values within the preset time period becomes lower and lower with the advance of time, the change trend of the signal strength within the preset time period may be considered to be decreasing. For example, the change curve of the signal measurement values presents a decreasing trend, or all the signal measurement values stored in the array or linked list are arranged in a descending order from front to back. It should be noted that, it is not necessarily a gradual decrease, as long as it substantially presents a decreasing trend front to back.

It can be understood that, when the signal measurement values obtained from recent measurements are in a gradually decreasing trend, it can be indicated that the mobile terminal is moving away from the coverage area with better signal in the serving cell and moving to the coverage area with weaker signal in the serving cell. Then, the mobile terminal may soon enter the interrupted service state.

In some scenes, although the signal in the area after moving is not as strong as the signal before moving, it is enough to support the mobile terminal to maintain in the current serving cell for the normal network service, that is, although the change trend of the signal strength is decreasing, the mobile terminal is still in the normal service state at present. Therefore, it is easy to misjudge if the mobile terminal is determined to be in the near-interrupted state only according to the decreasing change trend of the signal strength. Therefore, in some implementations, it is also possible to further determine whether the mobile terminal is in the near-interrupted state according to the magnitude of the latest signal measurement value. Specifically, the network service state of the mobile terminal may be determined to be the near-interrupted state when the change trend is decreasing and the signal measurement value at the current time point satisfies the first range. The signal measurement value at the current time point can be understood as the latest obtained signal measurement value, which can be the signal measurement value obtained recent one or two times from the current time point, and is not limited herein.

In some implementations, the first range may be the preset threshold mentioned in the above implementations, which can be used to evaluate whether the signal measurement value at the current time point approaches the minimum condition for the mobile terminal to camp on that the current serving cell satisfies. That is, if the signal measurement value at the current time point satisfies the first range, it can be considered that the mobile terminal can currently camp on the serving cell but the serving cell has approached the minimum condition for camping. Once the signal strength continues to decrease, the current serving cell may not satisfy the minimum condition for the mobile terminal to camp on (i.e., the mobile terminal can no longer camp on the current serving cell). Once the current serving cell does not satisfy the minimum condition for the mobile terminal to camp on, the mobile terminal will enter the OOS state. In other words, the signal measurement obtained when the mobile terminal is in the near-interrupted state generally satisfies the first range, i.e., the current signal measurement value satisfying the first range may be a sufficient condition of the mobile terminal being in the near-interrupted state.

The upper and lower limit values of the first range can be suitably set according to the actual needs, and are not limited herein. It should be noted that, since the mobile terminal can still camp on the current serving cell when the signal measurement value satisfies the first range, the lower limit value of the first range (i.e., the minimum value) at least needs to ensure that the current serving cell satisfies the minimum condition for the mobile terminal to camp on.

In some implementations, when the signal measurement value includes multiple types of values, a first range corresponding to each type may also be determined separately. It can be determined that the signal measurement value at the current time point satisfies the first range as long as the signal measurement value of one type satisfies its corresponding first range. Alternatively, it can be determined that the signal measurement value at the current time point satisfies the first range only when the signal measurement values of multiple types satisfy their corresponding first ranges, where the multiple types may be all types, which is not limited herein.

As an implementation, when the signal measurement value includes two types of RSRP value and RSRQ value, the S value can be calculated according to the RSRP value and the RSRQ value respectively, and then whether the S value satisfies the first range can be determined. Specifically, after two types of S values: the Srxlev value and the Squal value are respectively calculated according to the RSRP value and the RSRQ value, whether the Srxlev value satisfies a first Srxlev range or whether the Squal value satisfies a first Squal range can be determined respectively. Since both the Srxlev value and the Squal value can be used to evaluate the strength of the wireless signal, it can be determined that the signal measurement value at the current time point satisfies the first range when either the Srxlev value or the Squal value satisfies the above range.

Since the minimum condition for the mobile terminal to camp on that the current serving cell satisfies is the S value > 0, the lower limit of the first Srxlev range and the first Squal range may be set to 0, that is, the first Srxlev range may be (0, Threshold _1- Sr) and the first Squal range may be (0, Threshold_1_Sq). Threshold_1_Sr and Threshold_1_Sq are the upper limits of values, which can be the same or different. Threshold_1_Sr and Threshold_1_Sq can be suitably set according to the actual situation and are not limited herein. For example, Threshold_1_Sr can be set to 10 (dB) and Threshold_1_Sq can be set to 5 (dB).

Due to the fluctuation and instability of the wireless signal quality and strength, the signal measurement value measured by the mobile terminal may also be unstable, such as a sudden peak at a certain time point or a sudden valley at a certain time point. If the current network service state is estimated only according to whether the current signal measurement value satisfies the first range, it is easy to misjudge and thus the accuracy is not high. Therefore, it is possible to determine whether the mobile terminal is moving to a coverage area with a signal weaker than the previous signal by determining that the change trend of the signal strength is decreasing, and then to determine that the current serving cell has approached the minimum condition for the mobile terminal to camp on by determining that the signal measurement value at the current time point satisfies the first range. As such, it can be accurately determined that the mobile terminal is moving to the weak signal coverage area or the no signal area, in other words, the mobile terminal is about to enter the interrupted service state, that is, the mobile terminal is currently in the near-interrupted state. Apparently, it is also possible to jointly determine that the mobile terminal is currently in the near-interrupted state by first determining that the signal measurement value at the current time point satisfies the first range and then determining that the change trend of the signal strength is decreasing. The sequence of the two determination conditions is not limited herein.

Exemplarily, in an implementation, the mobile terminal may first determine whether all RSRP values and RSRQ values in the collected array or linked list are arranged in a descending order front to back. If not arranged in the descending order, continue to determine whether they are arranged in the descending order when a new measurement result value is received. If arranged in the descending order, the RSRP values and RSRQ values collected by the mobile terminal are continuously decreasing. Then, Srxlev and Squal can be respectively calculated according to the latest RSRP value and RSRQ value in the array or linked list, and determine whether Srxlev satisfies the first Srxlev range (0, Threshold _1- Sr), i.e., 0 < Srxlev < Threshold_1_Sr and determine whether Squal satisfies the first Squal range (0, Threshold_1_Sq), i.e., 0 < Squal < Threshold_1_Sq. If at least one of the determination conditions is satisfied, it may indicate that the mobile terminal has been in the near-interrupted state. If the two determination conditions are not satisfied but the Srxlev value and the Squal value are both greater than 0, the mobile terminal is not in the near-interrupted state but still in the normal service state. If both the Srxlev value and the Squal value are less than 0, the mobile terminal is in the interrupted service state.

Alternatively, the mobile terminal may determine the network service state of the mobile terminal according to the change of the signal measurement values within the time period. Specifically, the preset time period may include a first time period and a second time period. Referring to FIG. 6, S220 may also include the following.

S221b, a first average value of signal measurement values within the first time period earlier than the current time point is determined.

S222b, a second average value of signal measurement values within the second time period earlier than the current time point is determined.

In some implementations, due to the relatively large fluctuation in the signal, the signal measurement values within the preset time period may be very unstable, and the change trend of the signal strength within the preset time period cannot be determined. Therefore, whether the signal strengths are gradually weakening can be determined according to the change of the average signal strengths within the time period. Specifically, the first average value of the signal measurement values in the first time period prior to the current time point and the second average value of the signal measurement values in the second time period prior to the current time point may be determined, to determine whether the signal strengths are gradually weakening according to the change of the first average value and the second average value. The time length of the first time period and the second time period may be equal and the second time period may be later than the first time period. The specific definitions of the first time period and the second time period are similar to the definition of the preset time period described above and will not be repeated herein. It is understood that, when the signal measurement value includes multiple types of values, a first average value and a second average value corresponding to each type may also be determined respectively.

In some implementations, the first time period and the second time period may be continuous. In one way, the preset time period may be divided equally, to determine the first time period and the second time period, i.e., the first time period and the second time period may be the first half time period and the last half time period of the preset time period. For example, for the preset time period of the fixed time length 5S, the first time period can be the first 2.5S and the second time period can be the last 2.5S. For the preset time period corresponding to the fixed number of measurements 20, the first time period can be a preset time period corresponding to the first 10 measurements and the second time period can be a preset time period corresponding to the last 10 measurements. In other implementations, the first time period and the second time period may also be discontinuous, for example, the first time period may be the start part of the preset time period and the second time period may be the end part of the preset time period, and there is a time interval between the first time period and the second time period. The first time period and the second time period are not specifically limited herein.

In some implementations, the first average value of the signal measurement values within the first time period prior to the current time point can be determined as follows. A sum of all signal measurement values within the first time period is obtained and then a ratio of the sum to the first time period is determined as the first average value of the signal measurement values within the first time period. Alternatively, a total number of measurements of the signal measurement values within the first time period is obtained and then a ratio of the sum to the total number of measurements is determined as the first average value of the signal measurement values within the first time period. In some implementations, the sum may also be directly taken as the first average value because the first time period and the second time period are equal in length or in total number of measurements. The method for determining the first average value is not specifically limited herein and only needs to reflect the signal strength over the time period. The second average value is determined in a manner similar to that of the first average value and will not be repeated herein.

Exemplarily, in an implementation, the mobile terminal may divide the RSRP data and the RSRQ data in the array or linked list into two parts, where the first half of the data is the signal measurement values within the first time period and the last half of the data is the signal measurement values within the second time period. Then, the first average value of the first half of the RSRP data and the second average value of the last half of the RSRP data may be calculated, and the first average value of the first half of the RSRQ data and the second average value of the last half of the RSRQ data may be calculated, respectively. The calculation formulas can be as follows.

$$\text{the first average value of RSRP} =$$
$$(RSRP[0]+RSRP[1]+\ldots\ldots+RSRP[Maximum/2 -1])/Maximum*2;$$

$$\text{the second average value of RSRP} =$$
$$(RSRP[Maximum/2]+RSRP[Maximum/2 +1]+\ldots\ldots+RSRP[Maximum -1])/Maximum*2;$$

$$\text{the first average value of RSRQ} =$$
$$(RSRQ[0]+RSRQ[1]+\ldots\ldots+RSRQ[Maximum/2 -1])/Maximum*2;$$

$$\text{the second average value of RSRQ} =$$
$$(RSRQ[Maximum/2]+RSRQ[Maximum/2+1]+\ldots\ldots+RSRQ[Maximum -1])/Maximum*2.$$

RSRP[n] and RSRQ[n] denote (n-th) RSRP and (n-th) RSRQ in the array or linked list, where $0 \leq n < Maximum$.

S223b, determine that the network service state of the mobile terminal is the near-interrupted state when the second average value is less than the first average value and a signal measurement value at the current time point satisfies a second range.

It can be understood that, when the second average value is less than the first average value, it may indicate that, within the preset time period, the earlier signals are better than the later signals, that is, the signals within the preset time period are staged-weakened. Similar to the foregoing determining the network service state according to the change of the signal measurement values, if the network service state is determined only according to whether the signal measurement value at the current time point satisfies the second range, the accuracy is not high. Therefore, in some implementations, it is also possible to further determine whether the mobile terminal is in the near-interrupted state according to the latest signal measurement value. Specifically, the network service state of the mobile terminal may be determined to be the near-interrupted state when the second average value is less than the first average value and the signal measurement value at the current time point satisfies the second range. The description of definition of the second range and the related description of the signal measurement value at the current time point satisfying the second range can refer to the description related to the first range, which will not be described herein.

Understandably, it is also possible to jointly determine that the mobile terminal is currently in the near-interrupted state by determining that the signal measurement value at the current time point satisfies the second range and then by determining that the second average value is less than the first average value. The sequence of the two determination conditions is not limited herein.

Exemplarily, the mobile terminal may calculate Srxlev and Squal respectively according to the latest RSRP value and RSRQ value in the array or linked list and determine whether Srxlev satisfies the second Srxlev range (0, Threshold_2_Sr), i.e., 0 < Srxlev < Threshold_2_Sr and whether Squal satisfies the second Squal range (0, Threshold_2_Sq), i.e., 0 < Squal < Threshold_2_Sq, respectively. Threshold_2_Sr and Threshold_2_Sq are the upper limits of values, which can be the same or different. Threshold_2_Sr and Threshold_2_Sq can be suitably set according to the actual situation and are not limited herein. For example, Threshold_2_Sr can be set to 8 (dB) and Threshold_2_Sq can be set to 3 (dB).

If the two determination conditions are not satisfied, continue to determine whether it is satisfied when the new measurement result value is received. If at least one of the determination conditions is satisfied, it can be considered that the current serving cell has approached the minimum condition for residing by the mobile terminal. Then, the RSRP data and the RSRQ data in the array or linked list each are divided into two parts, to calculate the first average value of the first half of the RSRP data and the second average value of the last half of the RSRP data, and the first average value of the first half of the RSRQ data and the second average value of the last half of the RSRQ data. When the second average value is less than the first average value, it may indicate that the mobile terminal has been in the near-interrupted state. When the second average value is not less than the first average value, it can indicate that the mobile terminal is not in the near-interrupted state but still in the normal service state.

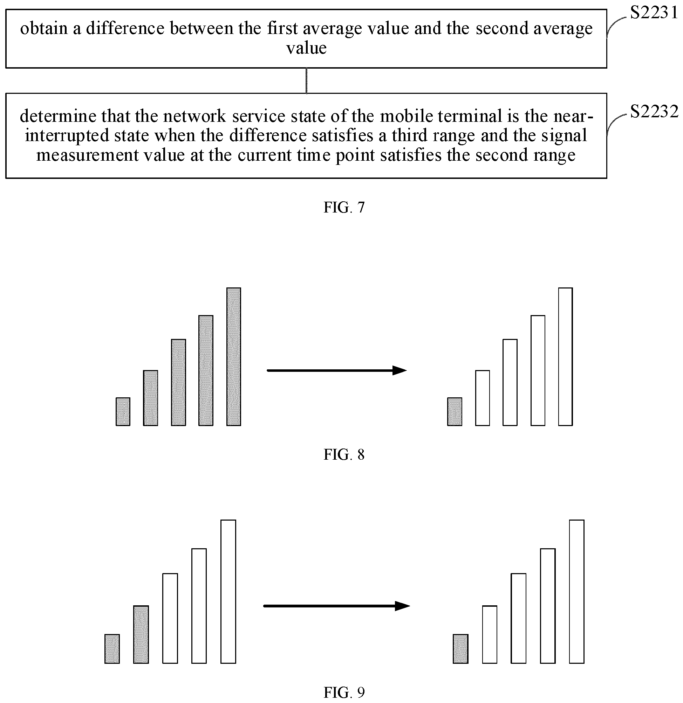

In some implementations, the staged signal change may also be determined according to the difference between the first average value and the second average value. Specifically, referring to FIG. 7, S223b may include the following.

S2231, a difference between the first average value and the second average value is determined.

S2232, determine that the network service state of the mobile terminal is the near-interrupted state when the difference satisfies a third range and the signal measurement value at the current time point satisfies the second range.

In some implementations, the mobile terminal may first determine the difference between the first average value and the second average value and then determine whether the difference satisfies the third range. The third range is a determination threshold for evaluating whether the signal measurement values of the two stages present a decreasing trend. That is, if the difference between the first average value and the second average value satisfies the third range, it can be considered that the signal measurement values of the two stages within the preset time period are staged-weakened. It can be understood that, the specific upper and lower limit values of the third range can be suitably set according to actual needs, which is not limited herein. It should be noted that, the signal is weakened when the difference between the first average value and the second average value satisfies the third range. Therefore, the first average value is at least greater than the second average value, and the lower limit value of the third range, i.e., the minimum value, is at least 0.

In some implementations, when the signal measurement value includes multiple types of values, a third range corresponding to each type may be determined separately. For example, when the signal measurement value includes two types of RSRP value and RSRQ value, the difference between the first average value and the second average value satisfying the third range means that: (the first average value of RSRP - the second average value of RSRP > Threshold_3_Sr) ‖ (the first average value of RSRQ - the second average value of RSRQ > Threshold_3_Sq). Threshold_3_Sr and Threshold_3_Sq are lower limits of values, which can be the same or different. Threshold_3_Sr and Threshold_3_Sq can be suitably set according to the actual situation and are not limited herein. For example, Threshold_3_Sr can be set to any number from 0 to 5 (dB) and Threshold_3_Sq can be set to any number from 0 to 3 (dB).

Generally, the scene models of OOS in the mobile terminal mainly include into two types: one is the steep drop mode, and the other is the slow drop mode. In the steep drop mode, the signal strength or signal quality at the mobile terminal rapidly decreases from a strong signal to a weak signal or no signal (see FIG. 8). Generally, this occurs when entering a no signal or weak signal coverage area from a good signal area, for example, entering a basement, elevator, or tunnel, etc. from an external wide area. In the slow drop mode, the signal strength or signal quality at the mobile terminal slowly decreases from a weak signal to a weaker signal or no signal (see FIG. 9). Generally, this occurs when entering from a weak signal area to no signal or extremely weak signal coverage area, such as remote rural areas or mountainous areas, etc. Therefore, in some implementations, it is possible to detect whether the near-interrupted state of the steep drop mode with obvious change occurs according to the evaluation of the change of the signal measurement values. Furthermore, it is possible to detect whether the near-interrupted state of the slow drop mode with slow or slight change occurs according to the evaluation of the staged change within the time period. It can be understood that, due to the obvious change in the steep drop mode, it is also possible to detect the near-interrupted state of the steep drop mode with obvious change according to the staged change within the above time period, which is not limited herein. Therefore, different Threshold values can be used to adapt to different scenes.

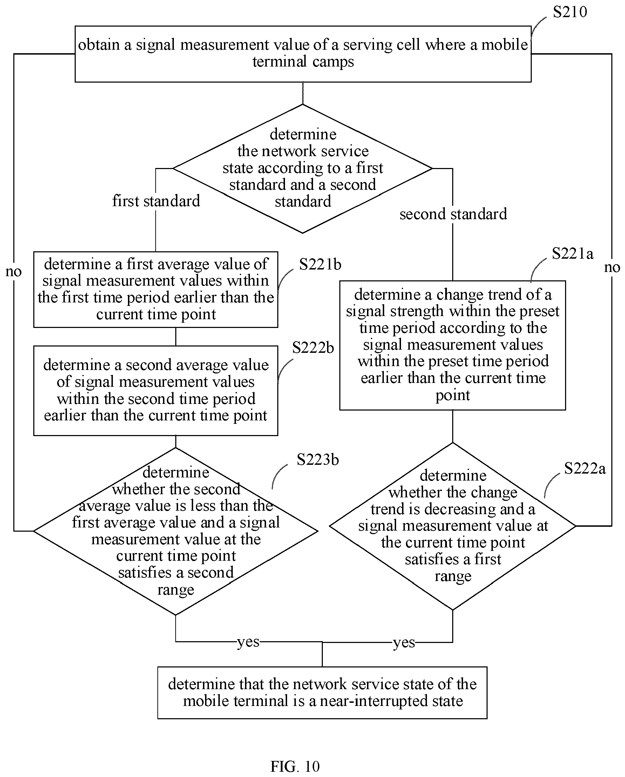

In some implementations, the above two evaluation methods can be used together, that is, the mobile terminal can determine whether the collected measurement result data satisfy the determination standard of the steep drop mode and the determination standard of the slow drop mode respectively according to different scene modes. The network service state of the mobile terminal can be determined as the near-interrupted state as long as one of the standards is satisfied. For example, refer to FIG. 10.

S230, a cell search for the mobile terminal is initiated when the network service state is the near-interrupted state, where the near-interrupted state is a state between the normal service state and the interrupted service state.

In the implementation of the disclosure, for S230, reference can be made to the related description of the above implementations, which will not be repeated herein.

In the cell search method provided in implementations of the disclosure, the network service state of the mobile terminal is determined according to the change of the signal measurement values within the preset time period by obtaining the signal measurement values within the preset time period earlier than the current time point of the serving cell where the mobile terminal camps, and when the determined network service state is the near-interrupted state, the cell search for the mobile terminal is initiated to camp on the new serving cell, where the near-interrupted state is the state between the normal service state and the interrupted service state. As such, whether the network service of the mobile terminal is about to enter the interrupted service state can be detected in advance according to the signal change within the preset time period earlier than the current time point, and when the network service of the mobile terminal is about to enter the interrupted service state, the cell search can be triggered, such that the mobile terminal can camp on the new cell with better network condition as soon as possible. Thus, each basic service of the user will not be affected by the service interruption, and the user experience can be improved.

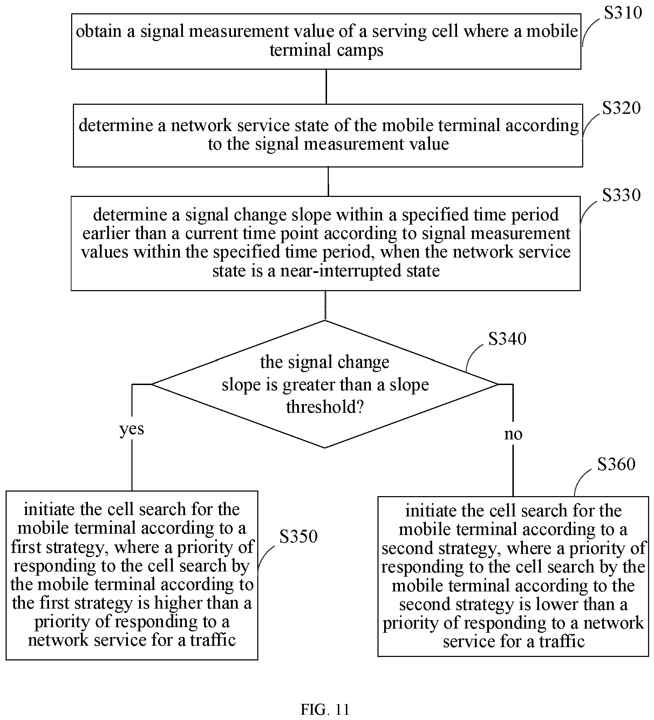

Referring to FIG. 11, FIG. 11 illustrates a flow chart of a cell search method provided in another implementation of the disclosure. The process illustrated in FIG. 11 will be described in detail below. The cell search method can include the following.

S310, a signal measurement value of a serving cell where a mobile terminal camps is obtained.

S320, a network service state of the mobile terminal is determined according to the signal measurement value.

In the implementation of the disclosure, for S310 and S320, reference may be made to the contents of the above implementations, which will not be repeated herein.

S330, a signal change slope within a specified time period earlier than a current time point is determined according to signal measurement values within the specified time period, when the network service state is a near-interrupted state.

In some implementations, when the network service state is determined to be the near-interrupted state, the mobile terminal may perform different interruption avoidance processing operations according to different signal change trends, to adapt to different scenes and achieve better performance optimization. Specifically, when the network service state is the near-interrupted state, the mobile terminal may determine the signal change slope within the specified time period according to the signal measurement values within the specified time period earlier than the current time point, to determine a corresponding interruption avoidance processing operation according to the signal change slope. The specified time period may be the preset time period or a time period longer or shorter than the preset time period, and is not limited herein.

As one implementation, the signal change slope within the specified time period may be determined as follows. The earliest signal measurement value and the corresponding earliest measurement time point as well as the latest signal measurement value and the corresponding latest measurement time point within the specified time period are first obtained. Then, a measurement difference between the earliest signal measurement value and the latest signal measurement value and a time difference between the earliest measurement time point and the latest measurement time point are obtained. Thereafter, a ratio of the measurement difference to the time difference is used as the signal change slope within the specified time period.

If the specified time period is a preset time period of a fixed time length, as another implementation, the ratio of the measurement difference to the specified time period can also be obtained as the signal change slope within the specified time period. Alternatively, the measured difference can be directly obtained as the signal change slope for reference because the fixed time length has no reference meaning.

It will be understood that, when the signal measurement value includes multiple types of values, the signal change slope of each type of signal measurement values within the specified time period may also be determined separately. Exemplarily, when the signal measurement value includes an RSRP value and an RSRQ value, a signal change slope of RSRP values within the specified time period and a signal change slope of RSRQ values within the specified time period may be determined, respectively.

For example, when the signal measurement value includes two types of RSRP value and RSRQ value, the mobile terminal may calculate a signal change slope Krsrp_1 in signal strength of the RSRP values and a signal change slope Krsrp_2 in signal quality of the RSRQ values, respectively. They can be calculated as follows.

$$Krsrp\_1 = (RSRP[0] - RSRP[Maximum-1]) / (Time[Maximum-1] - Time[0]);$$

$$Krsrp\_2 = (RSRQ[0] - RSRQ[Maximum-1]) / (Time[Maximum-1] - Time[0]).$$

S340, whether the signal change slope is greater than a slope threshold is determined. If yes, the method proceeds to S350; if no, the method proceeds to S360.

S350, the cell search for the mobile terminal is initiated according to a first strategy, where a priority of responding to the cell search by the mobile terminal according to the first strategy is higher than a priority of responding to a network service for a traffic.

S360, the cell search for the mobile terminal is initiated according to a second strategy, where a priority of responding to the cell search by the mobile terminal according to the second strategy is lower than a priority of responding to a network service for a traffic.

In the implementation of the disclosure, the mobile terminal can perform cell search operations with different strategies according to the magnitude of the signal change slope after obtaining the signal change slope within the specified time period. As such, different interruption avoidance processing operations can be performed according to different signal change trends, to adapt to different scenes and achieve better performance optimization. Specifically, the mobile terminal can determine whether the signal change slope is greater than the slope threshold. The cell search for the mobile terminal may be initiated according to the first strategy if greater than the slope threshold, where the priority of responding to the cell search by the mobile terminal according to the first strategy is higher than the priority of responding to the network service for the traffic. The cell search for the mobile terminal may be initiated according to the second strategy if not greater than the slope threshold, where the priority of responding to the cell search by the mobile terminal according to the second strategy is lower than the priority of responding to the network service for the traffic.

In some implementations, the slope threshold can be understood as a determination threshold for evaluating the change speed of signal attenuation, which can be stored in advance in the mobile terminal or obtained from broadcast messages sent by the network terminal, and is not limited herein. Its value can also be set suitably according to the actual scene, and it is not limited herein. For example, the slope threshold can be set to 1.

It can be understood that, if the signal change slope is greater than the slope threshold, the signal attenuation is quick, and thus the mobile terminal will soon enter the OOS state. In this case, the mobile terminal should immediately trigger the cell search process for the mobile terminal, to ensure that the mobile terminal can find a better cell to camp on as soon as possible, and the priority of executing the cell search task by the mobile terminal is higher than the priority of executing the general service. If the signal changes slowly, although the mobile terminal is in a weak signal area, it can still last for a while, and to minimize the impact on the normal service, although the cell search process for the mobile terminal can be triggered at this time, the priority of performing the cell search task by the mobile terminal is low, that is, the cell search task is executed in the background, the priority of executing the cell search task is lower than the priority of executing the general service, which can be interrupted by the general service. For example, it can be the background search.

In some implementations, when the signal measurement value includes multiple types of values, a slope threshold corresponding to each type may also be determined separately. Then, it can be determined that the signal attenuation changes rapidly if the signal change slope of one type is greater than its corresponding slope threshold. Alternatively, it can be determined that the signal attenuation changes rapidly only if the signal change slopes of multiple types are all greater than their corresponding slope thresholds, where the multiple types may be all types, which is not limited herein.

Exemplarily, when the signal measurement value includes two types of RSRP value and RSRQ value, whether the slope Krsrp_1 is greater than Threshold_4_Sr and whether the slope Krsrp_2 is greater than Threshold_4_Sq can be respectively determined. When any one of the slope Krsrp_1 and the slope Krsrp_2 satisfies the above condition, the signal change slope is determined to be greater than the slope threshold. That is, determine whether the following condition is satisfied: Krsrp_1 > Threshold_4_Sr ∥ Krsrp_1 > Threshold_4_Sq. Threshold_4_Sr and Threshold_4_Sq may be the same or different, and Threshold_4_Sr and Threshold_4_Sq may be suitably set according to actual conditions, which are not limited herein.

In some implementations, during cell search, if a better cell can be found by the mobile terminal, the mobile terminal may camp on a new cell and set the new cell as a new serving cell. That is, when a target cell with better signal strength and signal quality than the current camping serving cell is found, the mobile terminal can be controlled to hand over from the current camping serving cell to the target cell for camping, that is, the target cell is set as the new serving cell, to normally perform CS/PS service in the new serving cell, to avoid affecting the normal operation of basic communication service of the mobile terminal due to entering the OOS state.

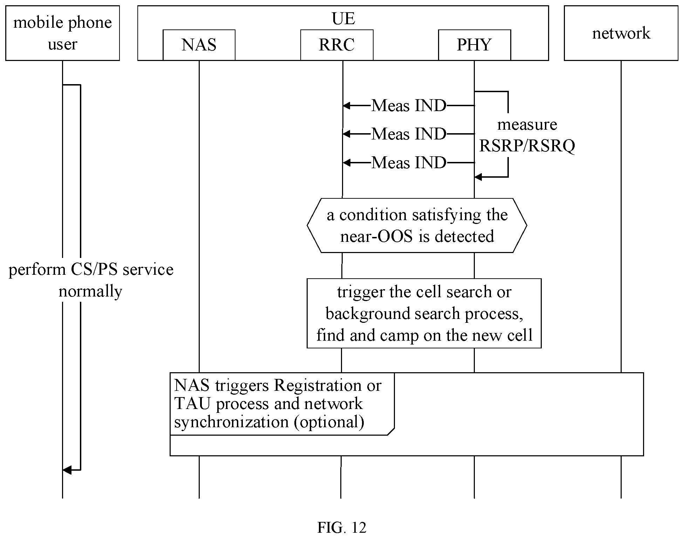

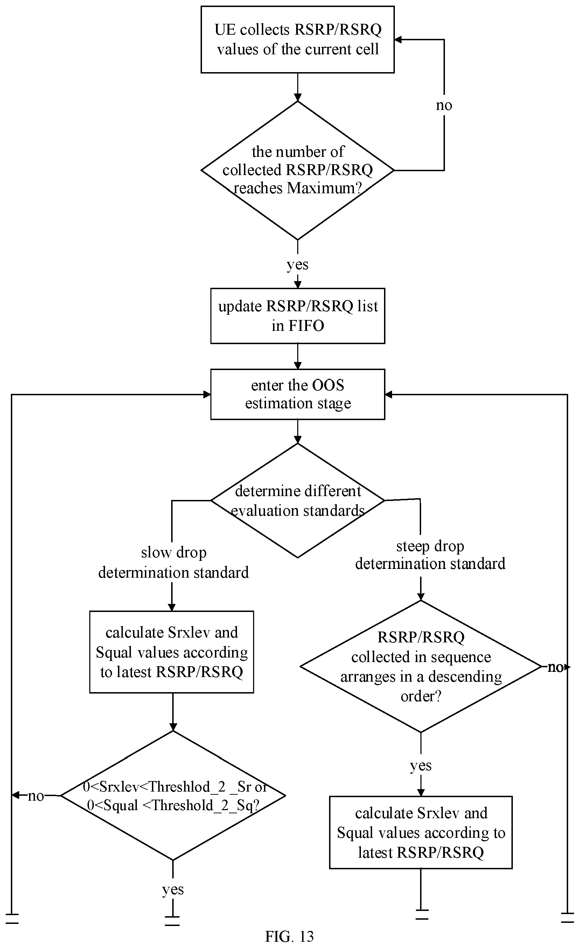

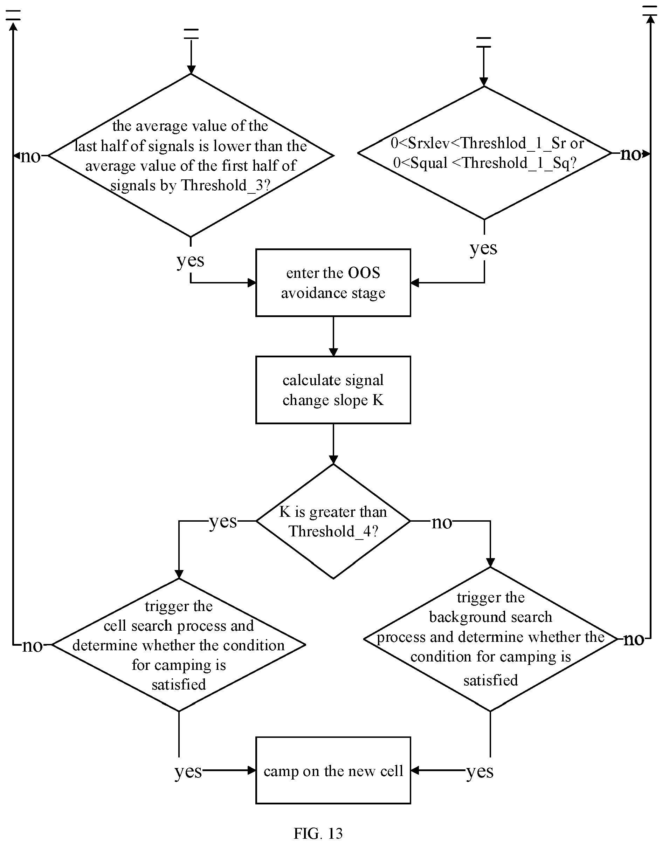

Exemplarily, referring to FIG. 12 and FIG. 13, FIG. 12 illustrates a main flow chart of a cell search method provided in the disclosure and FIG. 13 illustrates an overall flow chart of a cell search method provided in the disclosure. The mobile terminal collects the signal measurement values: RSRP values and RSRQ values of the current camping serving cell and stores them in an array or linked list. Then, the mobile terminal determines whether the number of elements in the array or linked list reaches Maximum. When Maximum is reached, the mobile terminal enters an OOS estimation stage. After entering the OOS estimation stage, the mobile terminal can determine whether the collected measurement result data satisfies the steep drop determination standard and the slow drop determination standard respectively according to different scene modes. If any of the standards is satisfied, it can be determined that the mobile terminal is currently in a near-OOS state. In this case, the mobile terminal can enter the OOS avoidance stage, to ensure that the mobile terminal can find a better cell to camp as soon as possible before entering the OOS state.

Specifically, the change slope K of the signal strength and signal quality at the mobile terminal can be calculated, and then whether to enter the cell search process or the background search process can be determined according to the magnitude of the slope K, that is, whether the slope K is greater than Threshold_4 is determined. If the condition is satisfied, it indicates that the signal changes quickly, and the mobile terminal will enter the OOS state quickly. In this case, the cell search process will be triggered immediately, and whether there is a better cell around for camping is searched for in advance. If a better cell can be found, the mobile terminal camps on the new cell and sets the new cell as a serving cell. If no better cell can be found, the mobile terminal enters the OOS estimation stage again, and when a new measurement result is received, the mobile terminal continues to determine the near-OOS scene.

If the condition is not satisfied, it indicates that the signal changes slowly. Although the mobile terminal is in a weak signal area, it can still last for a while. To minimize the impact on the normal service, the mobile terminal is trigged to perform background search process, and whether there is a better cell around for camping is searched for in advance. If a better cell can be found, the mobile terminal camps on a new cell and set the new cell as a serving cell. If no cell that can camp on is found, the mobile terminal continues to trigger the new cell search process until the mobile terminal can camp on a new cell with good signal. Finally, the mobile terminal camps on the new serving cell and can normally perform CS/PS service on the new serving cell.

In addition, in the implementation of the disclosure, the above cell can be broadly understood as a signal coverage area. In some implementations, when the cell search method provided in the implementation of the disclosure is applicable to a cellular communication system for implementation, the above cell can be understood as a geographical area covered by a signal of a base station. In other implementations, when the cell search method provided in the implementation of the disclosure is applicable to various other wireless transmission technologies, such as Wi-Fi signals, Bluetooth signals, Zigbee signals, Lora signals, Sigfox signals, for implementation, the above cell can be understood as a geographical area covered by a signal of a wireless transmission module such as Wi-Fi, Bluetooth, or Zigbee, etc. Because all of them involve the scene from signal attenuation to interruption, the cell search method provided in the disclosure can be used to search for a new signal coverage area in advance. As such, the mobile terminal can connect to a better signal coverage area before the mobile terminal enters the interrupted service state.

According to the cell search method provided in the implementation of the disclosure, the network service state of the mobile terminal is determined according to the signal measurement values of the serving cell where the mobile terminal camps, and when the network service state determined is the near-interrupted state, the signal change slope within the specified time period can be determined according to the signal measurement values within the specified time period earlier than the current time point. When the signal change slope is greater than the slope threshold, the cell search for the mobile terminal is initiated according to the first strategy, to camp on the new serving cell, where the priority of responding to the cell search by the mobile terminal according to the first strategy is higher than the priority of responding to the network service for the traffic. When the signal change slope is less than or equal to the slope threshold value, the cell search for the mobile terminal is initiated according to the second strategy, where the priority of responding to the cell search by the mobile terminal according to the second strategy is lower than the priority of responding to the network service for the traffic. Therefore, the mobile terminal can execute different cell search strategies according to different signal change trends, to adapt to different scenes and achieve better performance optimization.

Referring to FIG. 14, FIG. 14 illustrates a block diagram of a cell search device 700 provided in implementations of the disclosure. The cell search device 700 includes a state determining module 710 and a search initiating module 720. The state determining module 710 is configured to determine a network service state of a mobile terminal according to a signal measurement value of a serving cell where the mobile terminal camps. The search initiating module 720 is configured to initiate a cell search for the mobile terminal on condition that the network service state is a near-interrupted state, where the near-interrupted state is a state between a normal service state and an interrupted service state.

In some implementations, the state determining module 710 can includes a recent-signal determining unit, which is configured to determine the network service state of the mobile terminal according to signal measurement values within a preset time period earlier than a current time point of the serving cell where the mobile terminal camps.

In some implementations, the recent-signal determining unit is specifically configured to: determine, according to the signal measurement values within the preset time period earlier than the current time point of the serving cell where the mobile terminal camps, a change trend of a signal strength within the preset time period; and determine that the network service state of the mobile terminal is the near-interrupted state on condition that the change trend is decreasing and a signal measurement value at the current time point satisfies a first range.

In some implementations, the preset time period comprises a first time period and a second time period and the second time period is later than the first time period, and the recent-signal determining unit can include: a first obtaining sub-unit configured to determine a first average value of signal measurement values within the first time period earlier than the current time point of the serving cell where the mobile terminal camps; a second obtaining sub-unit configured to determine a second average value of signal measurement values within the second time period earlier than the current time point of the serving cell; and a parameter comparing sub-unit configured to determine that the network service state of the mobile terminal is the near-interrupted state on condition that the second average value is less than the first average value and a signal measurement value at the current time point satisfies a second range.

In some implementations, the parameter comparing sub-unit is specifically configured to: determine a difference between the first average value and the second average value; and determine that the network service state of the mobile terminal is the near-interrupted state on condition that the difference satisfies a third range and the signal measurement value at the current time point satisfies the second range.

In some implementations, the search initiating module 720 can be specifically configured to: determine, according to signal measurement values within a specified time period earlier than a current time point, a signal change slope within the specified time period, on condition that the network service state is the near-interrupted state; initiate the cell search for the mobile terminal according to a first strategy, on condition that the signal change slope is greater than a slope threshold, where a priority of responding to the cell search by the mobile terminal according to the first strategy is higher than a priority of responding to a network service for a traffic; initiate the cell search for the mobile terminal according to a second strategy, on condition that the signal change slope is less than or equal to the slope threshold, where a priority of responding to the cell search by the mobile terminal according to the second strategy is lower than a priority of responding to a network service for a traffic.

In some implementations, the cell search device 700 further includes a cell hand over module, which is configured to control the mobile terminal to hand over from the serving cell to a target cell to camp, on condition that the target cell is found.

Those skilled in the art will clearly appreciate that, for the convenience and simplicity of the description, the specific operation processes of the above device and modules can be referred to the corresponding processes in the above method implementations and will not be repeated herein.

In some implementations provided herein, the coupling between the modules may be electrical, mechanical, or other forms of coupling.

Furthermore, various functional modules in implementations of the disclosure may be integrated in one processing module, various modules may exist physically alone, or two or more modules may be integrated in one module. The integrated module can be realized in the form of hardware or software functional module.

In conclusion, the cell search device provided in the implementations of the disclosure is used for realizing the corresponding cell search method in the above method implementations and has the corresponding beneficial effect of the method implementations, which is not repeated herein.

Referring to FIG. 15, FIG. 15 illustrates a block diagram of a mobile terminal provided in implementations of the disclosure. The mobile terminal 100 may be a mobile terminal capable of running an application program, such as a notebook computer, a smart phone, a smart watch, smart glasses, etc. The mobile terminal 100 in the disclosure may include one or more components: a processor 110, a memory 120, and one or more program codes. The one or more program codes may be stored in the memory 120 and configured to be executed by the one or more processors 110 to perform the methods described in the above method implementations.

The processor 110 may include one or more processing cores. The processor 110 is configured to connect various parts within the entire mobile terminal 100 by using various interfaces and lines and perform various functions and process data of the mobile terminal 100 by running or executing an instruction, a program, a set of codes, or a set of instructions stored in the memory 120 and invoking the data stored in the memory 120. In some embodiments, the processor 110 may be implemented in at least one hardware form of digital signal processing (DSP), field-programmable gate array (FPGA), programmable logic array (PLA). The processor 110 may integrate one or a combination of a central processing unit (CPU), a cell searcher, a graphics processing unit (GPU), a modem, and the like. The CPU mainly is configured to deal with an operating system, a user interface, and application programs, etc. The GPU is responsible for rendering and drawing the displayed content. The modem is used to handle wireless communication. It will be appreciated that, the modem described above may also be implemented separately through one communication chip, without integrating into the processor 110.

The memory 120 may include a random-access memory (RAM), or may include a read-only memory (ROM). The memory 120 may be used to store an instruction, a program, a code, a set of codes, or a set of instructions. The memory 120 may include a program storage area and a data storage area. The program storage area may store instructions for implementing the operating system, store instructions for implementing at least one function (such as a touch function, a sound playback function, an image playback function, etc.), and store instructions for implementing various method implementations described below. The data storage area may also be configured to store data created by the mobile terminal 100 in use, such as telephone book, audio and video data, chat record data, and the like.

It is understood that, the structure illustrated in FIG. 15 is merely for illustration. The mobile terminal 100 may also include more or fewer components than that illustrated in FIG. 15 or have a completely different configuration from that illustrated in FIG. 15. Implementations of the disclosure are not limited in this regard.

Referring to FIG. 16, FIG. 16 illustrates a block diagram of a computer-readable storage medium provided in implementations of the disclosure. The computer-readable storage medium 800 stores program codes. The program codes may be invoked by the processor to perform the methods described in the above method implementations.

The computer readable storage medium 800 may be an electronic memory such as a flash memory, electrically erasable programmable read only memory (EEPROM), EPROM, hard disk, or ROM. In some embodiments, the computer-readable storage medium 800 includes a non-transitory computer-readable storage medium. The computer-readable storage medium 800 has a storage space for program codes 810 that perform any step in the above methods. The program codes may be read from or written to one or more computer program products. The program codes 810 may be compressed, for example, in an appropriate form.

Implementations of the disclosure further provide a chip. The chip may include a processor and an interface. The processor is connected with the interface. The processor may obtain program instructions through the interface and be used to run the program instructions to perform the methods described in the above method implementations.

The processor may be a hardware circuit or software instruction with information processing capability, or a combination of hardware and software. In the implementations process, steps of the above methods may be completed by integrated logic circuits of hardware in the processor or by instructions in the form of software. The transmission or reception of data, instructions, or information can be completed through the interface. The processor can process the data, instructions, or other information received through the interface or can send the processed information through the interface.

Finally, it should be noted that, the above implementations are merely intended to illustrate but not to limit the technical solutions of the disclosure. Although the disclosure has been described in detail with reference to the foregoing implementations, it can be understood that, those of ordinary skill in the art can modify the technical solutions described in the foregoing implementations or make equivalent substitutions for some technical features therein. These modifications or substitutions do not drive the essence of the corresponding technical solutions away from the spirit and scope of the technical solutions of the implementations of the disclosure.

**Claims**

1. A cell search method, comprising:

    determining a network service state of a mobile terminal according to a signal measurement value of a serving cell where the mobile terminal camps; and
    initiating a cell search for the mobile terminal on condition that the network service state is a near-interrupted state, the near-interrupted state being a state between a normal service state and an interrupted service state.

2. The method of claim 1, wherein determining the network service state of the mobile terminal according to the signal measurement value of the serving cell where the mobile terminal camps comprises:
    determining the network service state of the mobile terminal according to signal measurement values within a preset time period earlier than a current time point of the serving cell where the mobile terminal camps.

3. The method of claim 2, wherein determining the network service state of the mobile terminal according to the signal measurement values within the preset time period earlier than the current time point of the serving cell where the mobile terminal camps comprises:

    determining, according to the signal measurement values within the preset time period earlier than the current time point of the serving cell where the mobile terminal camps, a change trend of a signal strength within the preset time period; and
determining that the network service state of the mobile terminal is the near-interrupted state on condition that the change trend is decreasing and a signal measurement value at the current time point satisfies a first range.

4. The method of claim 3, wherein determining, according to the signal measurement values within the preset time period earlier than the current time point of the serving cell where the mobile terminal camps, the change trend of the signal strength within the preset time period comprises:

   generating, according to the signal measurement values within the preset time period earlier than the current time point of the serving cell where the mobile terminal camps, a change curve of the signal measurement values; and
   determining the change trend of the signal strength within the preset time period according to a trend of the change curve.

5. The method of claim 3, wherein determining, according to the signal measurement values within the preset time period earlier than the current time point of the serving cell where the mobile terminal camps, the change trend of the signal strength within the preset time period comprises:

   obtaining an arrangement result of the signal measurement values within the preset time period earlier than the current time point of the serving cell where the mobile terminal camps by arranging, in a chronological order, the signal measurement values; and
   determining the change trend of the signal strength within the preset time period according to the arrangement result of the signal measurement values.

6. The method of any of claims 2-5, wherein the preset time period comprises a first time period and a second time period and the second time period is later than the first time period, and determining the network service state of the mobile terminal according to the signal measurement values within the preset time period earlier than the current time point of the serving cell where the mobile terminal camps comprises:

   determining a first average value of signal measurement values within the first time period earlier than the current time point of the serving cell where the mobile terminal camps;
   determining a second average value of signal measurement values within the second time period earlier than the current time point of the serving cell; and
   determining that the network service state of the mobile terminal is the near-interrupted state on condition that the second average value is less than the first average value and a signal measurement value at the current time point satisfies a second range.

7. The method of claim 6, wherein determining that the network service state of the mobile terminal is the near-interrupted state on condition that the second average value is less than the first average value and the signal measurement value at the current time point satisfies the second range comprises:

   determining a difference between the first average value and the second average value; and
   determining that the network service state of the mobile terminal is the near-interrupted state on condition that the difference satisfies a third range and the signal measurement value at the current time point satisfies the second range.

8. The method of any of claims 1-7, wherein a preset time period is a time period with a fixed time length.

9. The method of any of claims 1-7, wherein a preset time period is a time period in which a fixed number of measurements are completed.

10. The method of any of claims 1-9, wherein initiating the cell search for the mobile terminal on condition that the network service state is the near-interrupted state comprises:

    determining, according to signal measurement values within a specified time period earlier than a current time point, a signal change slope within the specified time period, on condition that the network service state is the near-interrupted state; and
    initiating the cell search for the mobile terminal according to a first strategy, on condition that the signal change slope is greater than a slope threshold, wherein a priority of responding to the cell search by the mobile terminal according to the first strategy is higher than a priority of responding to a network service for a traffic.

11. The method of any of claims 1-10, wherein initiating the cell search for the mobile terminal on condition that the network service state is the near-interrupted state comprises:

determining, according to signal measurement values within a specified time period earlier than a current time point, a signal change slope within the specified time period, on condition that the network service state is the near-interrupted state; and

initiating the cell search for the mobile terminal according to a second strategy, on condition that the signal change slope is less than or equal to a slope threshold, wherein a priority of responding to the cell search by the mobile terminal according to the second strategy is lower than a priority of responding to a network service for a traffic.

12. The method of claim 10 or 11, wherein determining, according to the signal measurement values within the specified time period earlier than the current time point, the signal change slope within the specified time period, on condition that the network service state is the near-interrupted state comprises:

determining an earliest signal measurement value and an earliest measurement time point corresponding to the earliest signal measurement value and a latest signal measurement value and a latest measurement time point corresponding to the latest signal measurement value within the specified time period earlier than the current time point;

determining a measurement difference between the earliest signal measurement value and the latest signal measurement value;

determining a time difference between the earliest measurement time point and the latest measurement time point; and

determining the signal change slope within the specified time period according to a ratio of the measurement difference to the time difference.

13. The method of any of claims 1-12, wherein after initiating the cell search for the mobile terminal on condition that the network service state is the near-interrupted state, the method further comprises:
controlling the mobile terminal to hand over from the serving cell to a target cell to camp, on condition that the target cell is found.

14. The method of any of claims 1-13, wherein the signal measurement values are stored in an array or linked list of a fixed length, and the method further comprises:
deleting a signal measurement value stored first in the array or the linked list, on condition that the number of the signal measurement values stored in the array or the linked list reaches the fixed length and a new signal measurement value is obtained.

15. The method of any of claims 1-14, wherein the signal measurement value comprises a reference signal received quality (RSRQ).

16. The method of any of claims 1-15, wherein the signal measurement value comprises a reference signal received power (RSRP).

17. A cell search device, comprising:

a state determining module configured to determine a network service state of a mobile terminal according to a signal measurement value of a serving cell where the mobile terminal camps; and
a search initiating module configured to initiate a cell search for the mobile terminal on condition that the network service state is a near-interrupted state, the near-interrupted state being a state between a normal service state and an interrupted service state.

18. A chip, comprising a processor and an interface, wherein the processor is configured to obtain program instructions via the interface and the processor is configured to run the program instructions to perform the method of any of claims 1-16.

19. A mobile terminal, comprising:

   one or more processors;
   a memory; and
   one or more program codes stored in the memory and configured to be executed by the one or more processors to perform the method of any of claims 1-16.

20. A computer-readable storage medium, storing program codes which are invoked by a processor to perform the method of any of claims 1-16.

FIG. 1

| mobile phone user | UE | | | network |
|---|---|---|---|---|
| | NAS | RRC | PHY | |

←—Meas IND—

←—Meas IND—    measure RSRP/RSRQ

←—Meas IND—

S > 0 is detected

perform CS/PS service normally

←—OOS IND—

trigger network search in OOS, find and camp on a new cell

NAS triggers Registration or TAU process and network synchronization (optional)

FIG. 2

determine a network service state of a mobile terminal according to a signal measurement value of a serving cell where the mobile terminal camps ⟋ S110

initiate a cell search for the mobile terminal when the network service state is a near-interrupted state, where the near-interrupted state is a state between the normal service state and the interrupted service state ⟋ S120

FIG. 3

obtain a signal measurement value of a serving cell where a mobile terminal camps — S210

determine a network service state of the mobile terminal according to signal measurement values within a preset time period earlier than a current time point — S220

initiate a cell search for the mobile terminal when the network service state is the near-interrupted state, where the near-interrupted state is a state between the normal service state and the interrupted service state — S230

FIG. 4

determine a change trend of a signal strength within the preset time period according to the signal measurement values within the preset time period earlier than the current time point — S221a

determine that the network service state of the mobile terminal is the near-interrupted state when the change trend is decreasing and a signal measurement value at the current time point satisfies a first range — S222a

FIG. 5

determine a first average value of signal measurement values within the first time period earlier than the current time point — S221b

determine a second average value of signal measurement values within the second time period earlier than the current time point — S222b

determine that the network service state of the mobile terminal is the near-interrupted state when the second average value is less than the first average value and a signal measurement value at the current time point satisfies a second range — S223b

FIG. 6

obtain a difference between the first average value and the second average value $\quad$ S2231

determine that the network service state of the mobile terminal is the near-interrupted state when the difference satisfies a third range and the signal measurement value at the current time point satisfies the second range $\quad$ S2232

FIG. 7

FIG. 8

FIG. 9

S210

obtain a signal measurement value of a serving cell where a mobile terminal camps

determine the network service state according to a first standard and a second standard

first standard

second standard

no

no

S221b

determine a first average value of signal measurement values within the first time period earlier than the current time point

S221a

determine a change trend of a signal strength within the preset time period according to the signal measurement values within the preset time period earlier than the current time point

S222b

determine a second average value of signal measurement values within the second time period earlier than the current time point

S223b

determine whether the second average value is less than the first average value and a signal measurement value at the current time point satisfies a second range

S222a

determine whether the change trend is decreasing and a signal measurement value at the current time point satisfies a first range

yes

yes

determine that the network service state of the mobile terminal is a near-interrupted state

FIG. 10

obtain a signal measurement value of a serving cell where a mobile terminal camps — S310

determine a network service state of the mobile terminal according to the signal measurement value — S320

determine a signal change slope within a specified time period earlier than a current time point according to signal measurement values within the specified time period, when the network service state is a near-interrupted state — S330

the signal change slope is greater than a slope threshold? — S340

yes

no

initiate the cell search for the mobile terminal according to a first strategy, where a priority of responding to the cell search by the mobile terminal according to the first strategy is higher than a priority of responding to a network service for a traffic — S350

initiate the cell search for the mobile terminal according to a second strategy, where a priority of responding to the cell search by the mobile terminal according to the second strategy is lower than a priority of responding to a network service for a traffic — S360

FIG. 11

FIG. 12

FIG. 13

FIG. 13

cell search device
700

state determining module 710

search initiating module 720

FIG. 14

100

memory 120

processor 110

FIG. 15

computer-readable storage medium 800

810

program codes configured to perform various operations in method implementations of the disclosure

FIG. 16

## INTERNATIONAL SEARCH REPORT

| | International application No. |
|---|---|
| | **PCT/CN2021/112890** |

**A. CLASSIFICATION OF SUBJECT MATTER**

H04W 36/00(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; 3GPP; CNKI: 服务, 驻留, 小区, 信号, 测量, 强度, 服务状态, 临近, 中断, 启动, 开始, 搜索, 搜网, service, cell, rsrp, rsrq, state, about, break , interrupt, search

**C. DOCUMENTS CONSIDERED TO BE RELEVANT**

| Category* | Citation of document, with indication, where appropriate, of the relevant passages | Relevant to claim No. |
|---|---|---|
| PX | CN 112243278 A (GUANGDONG OPPO MOBILE TELECOMMUNICATIONS CORP., LTD.) 19 January 2021 (2021-01-19)<br>description paragraphs [0028]-[0168] | 1-20 |
| PX | CN 112689312 A (GUANGDONG OPPO MOBILE TELECOMMUNICATIONS CORP., LTD.) 20 April 2021 (2021-04-20)<br>description paragraphs [0016]-[0136] | 1-20 |
| X | CN 102547941 A (HUAWEI DEVICE CO., LTD.) 04 July 2012 (2012-07-04)<br>description, paragraphs [0024]-[0100] | 1-20 |
| X | CN 110636598 A (GOSUNCNWELINK TECHNOLOGY CO., LTD.) 31 December 2019 (2019-12-31)<br>description paragraphs [0048]-[0152] | 1-20 |
| A | WO 2018197092 A1 (SONY CORP. et al.) 01 November 2018 (2018-11-01)<br>entire document | 1-20 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 October 2021** | **03 November 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/112890**

| Patent document cited in search report | | | Publication date (day/month/year) | Patent family member(s) | | | Publication date (day/month/year) |
|---|---|---|---|---|---|---|---|
| CN | 112243278 | A | 19 January 2021 | None | | | |
| CN | 112689312 | A | 20 April 2021 | None | | | |
| CN | 102547941 | A | 04 July 2012 | US | 2014092768 | A1 | 03 April 2014 |
| | | | | US | 8848572 | B2 | 30 September 2014 |
| | | | | PT | 2699043 | E | 31 March 2016 |
| | | | | WO | 2013107185 | A1 | 25 July 2013 |
| | | | | CN | 102547941 | B | 30 September 2015 |
| | | | | ES | 2563181 | T3 | 11 March 2016 |
| | | | | JP | 2014517636 | A | 17 July 2014 |
| | | | | JP | 5770372 | B2 | 26 August 2015 |
| | | | | EP | 2699043 | A1 | 19 February 2014 |
| | | | | EP | 2699043 | A4 | 13 August 2014 |
| | | | | EP | 2699043 | B1 | 30 September 2015 |
| | | | | US | 8797910 | B2 | 05 August 2014 |
| CN | 110636598 | A | 31 December 2019 | None | | | |
| WO | 2018197092 | A1 | 01 November 2018 | EP | 3596964 | A1 | 22 January 2020 |
| | | | | US | 2021112473 | A1 | 15 April 2021 |
| | | | | US | 11044657 | B2 | 22 June 2021 |
| | | | | DE | 112018002214 | T5 | 20 February 2020 |
| | | | | US | 2021274413 | A1 | 02 September 2021 |

Form PCT/ISA/210 (patent family annex) (January 2015)

**REFERENCES CITED IN THE DESCRIPTION**

**Patent documents cited in the description**

- CN 202011111593